# EUROPÄISCHE PATENTANMELDUNG

(11) **EP 1 353 256 A1**
(43) Veröffentlichungstag der Anmeldung: **15.10.2003**
(21) Anmeldenummer: 02008446.3
(22) Anmeldetag: 13.04.2002
(51) Int. Cl.: G05G 5/28, F16P 3/14, G05G 9/047

(54) **Bedienkontrolleinrichtung einer Arbeitsmaschine, eines Fahrzeugs oder einer Anlage**

(71) Anmelder: W. Gessmann GmbH, 74211 Leingarten (DE)
(72) Erfinder: Mokler, Thomas, 74211 Leingarten (DE); Ehrensperger, Alwin, 74074 Heilbronn (DE)
(74) Vertreter: KOHLER SCHMID + PARTNER

(57) **Zusammenfassung**

Eine Bedienkontrolleinrichtung einer Arbeitsmaschine, eines Fahrzeugs oder einer Anlage weist eine Sender-Empfänger-Einrichtung (1), welche am oder im Bedienelement (2) angebracht ist, und einen mobilen, von dem Bediener permanent zu tragenden Transponder (4) auf. Es wird eine Kontrolle der Bedienung der Arbeitsmaschine erreicht, d.h. es wird ein unbeabsichtigtes Betätigen des Bedienelements (2) verhindert.

## Beschreibung

Die Erfindung betrifft die Bedienung einer Arbeitsmaschine (Bagger, Gabelstapler, Kran, etc.), eines Fahrzeugs oder einer Anlage mit Hilfe eines Bedienelements, beispielsweise eines Griffelements bzw. eines Joysticks oder eines Pedals.

Zugangskontrolleinrichtungen für Kraftfahrzeuge mit einer Sender-Empfänger-Einrichtung und einem mobilen Transponder sind bekannt. Durch derartige Zugangskontrolleinrichtungen wird in der Regel nur verhindert, dass ein Kraftfahrzeug von einer unbefugten Person geöffnet werden kann.

Bei Arbeitsmaschinen tritt das Problem auf, dass nicht unbedingt eine Zugangskontrolle, sondern eine Kontrolle der Bedienung der Arbeitsmaschine erforderlich ist, d.h. es muss ein unbeabsichtigtes Betätigen des Bedienelements verhindert werden. Die unbeabsichtigte Bedienung wird bisher durch sog. Totmann-Einrichtungen kontrolliert.

Daher schlägt der Anmelder zur Lösung dieses Problems eine Bedienkontrolleinrichtung mit einer Sender-Empfänger-Einrichtung vor, welche am oder im Bedienelement angebracht ist, und mit einem mobilen, von dem Bediener permanent zu tragenden Transponder. Die Anwendung der Transponder-Technik ist in Bedienelemente wie Joysticks- oder Griffelemente von Arbeitsmaschinen direkt integriert. Aufgrund der begrenzten Reichweite der Funkübertragung zum Transponder wird sichergestellt, dass das die Betätigung auslösende Objekt ( z. B. eine Hand), in dessen Nähe der Transponder positioniert ist, unmittelbar die gewollte Betätigung verursacht und dies nicht ungewollt durch andere Objekte ohne Transponder verursacht wird. Notwendigerweise wird der Anwender durch einen permanenten Signalaustausch ( Dialog) zwischen Sender - Empfänger-Einrichtung und Transponder fortlaufend identifiziert, und die Beabsichtigung und Berechtigung geprüft.

Das System kann so ausgeführt werden, dass verschiedene Transponder, die von verschiedenen, gleichzeitig berechtigten Bedienern benutzt werden, unterschiedliche berechtigende Codes aussenden. So ist ein unterscheiden verschiedener, berechtigter Bediener anhand des Codes möglich.

So können Einstellungen bedienerabhängig automatisch eingerichtet bzw. umgeschaltet werden. Parameter der Maschine können bedienerabhängig voreingestellt abgerufen werden.

Vorteile der Erfindung sind in der Übertragungssicherheit sowie in der absolut zuverlässigen Verhinderung von Missbrauch und unbeabsichtigten Bedienung zu sehen.

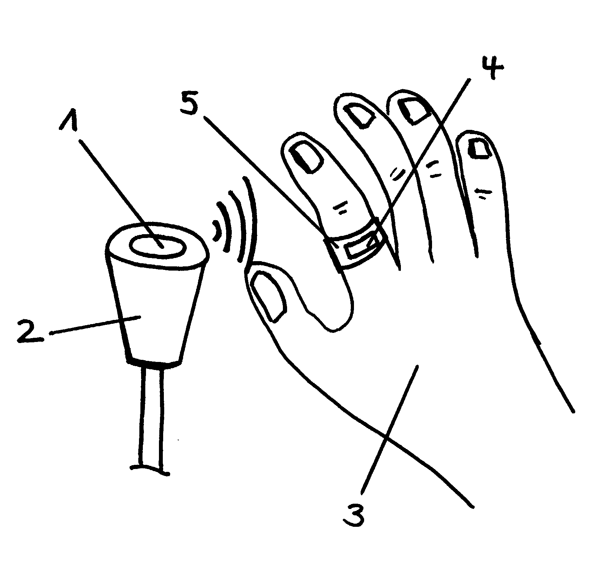

Ein bevorzugtes Ausführungsbeispiel wird mit Hilfe der Zeichnung nachfolgend beschrieben.

Die Figur zeigt schematisch das Zusammenwirken zwischen einer Sender-Empfänger-Einrichtung **1**, welche in ein Griffelement **2** zur Bedienung einer nicht dargestellten Arbeitsmaschine integriert ist. Die Sender-Empfänger-Einrichtung 1 ist platzsparend mit einem geringen Gewicht in das Gehäuse des Griffelements 2 integriert und besteht im wesentlichen aus einer Elektronik, einer Antenne und einer Stromversorgung. Die Elektronik umfasst Bauelemente zur Umwandlung, Aufbereitung und Senden / Empfangen von Funksignalen.

Zur Bedienung der Arbeitsmaschine und / oder zur Ausführung von Steuerbefehlen kann das Griffelement 2 von einer Hand **3** eines Bediener betätigt werden. Analog könnte auch ein Pedal mit einem Fuß entsprechend betätigt werden.

Das Griffelement 2 ist mit der Sender-Empfänger-Einrichtung 1 ausgerüstet, welche sowohl in der Lage ist, Funkwellen zur Aktivierung und Versorgung eines Transponders **4** zu Verfügung zu stellen als auch gesendete Codes zu verarbeiten. Der mobile Transponder 4 wird von dem Bediener am Körper getragen. Der Transponder 4 ist in einen Ring **5** integriert. Alternativ zu dem Ring kann auch eine Uhr, ein Armband, eine unter die Haut implantierte Einheit, ein Kleidungsstück wie ein Handschuh oder dergleichen verwendet werden. Die Unterbringung ist stoßfest und spritzwassergeschützt ausgeführt. Die Sender-Empfänger-Einrichtung 1 der Arbeitsmaschine und der mobiler Transponder 4 des Bedieners bilden zusammen eine Bedienkontrolleinrichtung. Von der Sender-Empfänger-Einrichtung 1 ausgesendete Signale werden von dem Transponder 4 empfangen, verarbeitet und an die Sender-Empfänger-Einrichtung 1 zurückübertragen. Der Transponder 4 ist so beschaffen, dass er bei Bestrahlung durch bestimmte Funkwellen einen Code zurücksendet, anhand dessen der Bediener identifiziert werden kann. Das Griffelement 2 reagiert nur auf Steuerbefehle des Bedieners, wenn ein zulässiger Code erfolgreich und ständig empfangen wird. Nur der berechtigte Bediener kann aus diesem Grund eine Bedienung der Arbeitsmaschine ausführen. So wird sichergestellt, dass das Griffelement nur wie vorgesehen betätigt werden kann.

Der Transponder 4 ist in dem Ring 5 untergebracht, welchen der Bediener trägt. Das Griffelement 2 kann nur betätigt werden, wenn die richtige Hand (die mit dem Ring 5) des Bedieners das Griffelement umfasst. Ein versehentliches Bedienen mit dem Ellenbogen oder dem Knie beim Einsteigen wird so zuverlässig ausgeschlossen.

### BEZUGSZEICHENLISTE

- 1: Sender-Empfänger-Einrichtung
- 2: Griffelement
- 3: Hand eines Bedieners
- 4: Transponder
- 5: Ring

## Patentansprüche

1. Bedienkontrolleinrichtung einer Arbeitsmaschine, eines Fahrzeugs oder einer Anlage mit einer Sender-Empfänger-Einrichtung (1), welche am oder im Bedienelement (2) angebracht ist, und mit einem mobilen, von dem Bediener permanent zu tragenden Transponder (4).

2. Bedienkontrolleinrichtung, **dadurch gekennzeichnet, dass** der Transponder (4) in ein Kleidungsstück (5) integriert ist.

3. Bedienkontrolleinrichtung nach Anspruch 2, **dadurch gekennzeichnet, dass** das Kleidungsstück ein Ring (5), eine Uhr, ein Armband, ein Handschuh oder dergleichen ist.

4. Bedienkontrolleinrichtung nach Anspruch 1, **dadurch gekennzeichnet, dass** der Transponder unter die Haut des Anwenders implantierbar ist.

5. Bedienkontrolleinrichtung nach einem der vorhergehenden Ansprüche, **dadurch gekennzeichnet, dass** eine Anwender bezogene Bedienberechtigung automatisch abrufbar und einstellbar ausgebildet sind.
